# EUROPEAN PATENT APPLICATION

(11) **EP 4 647 927 A1**
(43) Date of publication of application: **12.11.2025**
(21) Application number: 24174894.6
(22) Date of filing: 08.05.2024
(51) Int. Cl.: G06F 16/21, G06F 16/25, G06F 16/28

(54) **METHOD OF OPERATING A SEMANTIC INFORMATION INTEGRATOR MODULE, SEMANTIC INFORMATION INTEGRATOR MODULE, SYSTEM, COMPUTER PROGRAM PRODUCT AND COMPUTER READABLE MEMORY**

(71) Applicant: Siemens Aktiengesellschaft, 80333 München (DE)
(72) Inventor: ANICIC, Dr. Darko, 81379 Munchen (DE); SCROCCA, Mario, 28100 Novara (IT); CARENINI,Alessio, 20037 Paderno Dugnano (IT); FIANO, Andrea, 20075 Colturano (IT)
(74) Representative: Siemens Patent Attorneys

(57) **Abstract**

The invention relates to a method of operating a semantic information integrator module (12), comprising the following steps performed by the semantic information integrator module (12): receiving an input message (13), the input message (13) comprising data (15) of a first data model (4); extracting the data (15) of the first data model (4) and mapping the data (15) to a RDF (16) of a predefined information model (17) using a first RDF (16) template specific to the first data model (4); extracting the data (15) of the RDF (16) of the predefined information model (17) and mapping the data (15) to a second data model (5) using a second RDF (16) template specific to the second data model (5); and sending an output message (14), the output message (14) comprising data (15) of the second data model (5).

## Description

The invention is concerned with a method of operating a semantic information integrator module, a semantic information integrator module, a system comprising a semantic information integrator module, a computer program product and a computer readable memory comprising a computer program product.

Interoperability is a property of modern systems in industrial domain, which is increasingly getting important. Interoperability can be defined as the ability of two or more devices (e.g., assets, agents, device, machines, services, applications) to exchange each other's data. This may happen during various activities. For example, one device searches data from another device, one device updates data from another device, or one device operates on data from another device. In this process, the operation of data may include processing, simulation, validation, verification, reasoning, planning, and so forth. In some of these activities, it may be beneficial that the devices not only exchange the data, but also understand the exchanged data.

Semantic interoperability can be defined as the ability of two or more devices to exchange and understand each other's data correctly. Whereas for exchanging the data, the two devices may just need to implement a common communication protocol, the understating of the data is more complex. To achieve this, the two devices need to have a common semantic model, which they use for interpretation of the exchanged data. Such a semantic model can be understood as a formal specification of certain concepts, relations, and rules that are important for understanding the data. An important feature of the semantic model is that it can be used by both humans and machines when interpreting the data.

A task of mapping different semantic models and their data have been tackled in various ways. Most often, solutions include different forms of mapping rules. The mapping rules define how to map a concept from one of the semantic models into the other of the semantic models. The mapping rules can then be implemented programmatically. The program implements the mapping rules and can be applied whenever a user needs to map a semantic model and into another semantic model. Similar procedure applies to a mapping of data of one of the semantic models to the other sematic model too.

This procedure is simple but is not effective when the mapping rules for mapping a number of N semantic models to a number of M semantic models have to be provided. It is further not effective, when these N x M mappings have to be updated, e.g., to extend them as standardized information models evolve or use cases to be addressed with information models change. In this case, a method for declarative mapping of domain-specific data is more desirable.

The RDF mapping language (RML) is a generic mapping language defined to express rules that map data in heterogeneous structures and serializations to the Resource Description Framework (RDF) data model. The inventor experienced few difficulties by applying RML to industrial information models. RML is designed to map data instances to individuals, therefore the definition of mappings to generate Web Ontology Language (OWL) axioms can require the definition of custom functions or modification to the source code of available RML implementations. RML doesn't allow to define namespaces based on the input. So, yet another custom solution should be implemented for that case. Sometimes, for one input statement more than one (RDF) statements should be produced by the mapping. Thus, the definition based on RML mappings gets verbose and difficult to read, interpret, and modify.

It is an objective of the present invention to provide a method for declarative mapping for mapping data between different semantic models.

This objective is achieved by the respective subject matter of the independent claims. Further implementations and preferred embodiments are subject matter of the dependent claims.

Proposed is a method for declarative mapping of domain-specific data into standardized information models based on mapping templates.

A first aspect of the present invention is related to a method of operating a semantic information integrator module. The semantic information integrator module may be a software module or a hardware module of a system comprising a first device and a second device. The semantic information integrator module is configured to provide an interoperability between the first device and the second device.

The method comprises the following steps performed by the semantic information integrator module.

A first step comprises a receiving of an input message from the first device for the second device. The input message comprises data of a first data model employed by the first device. In other words in the first step of the method the semantic information integrator module receives the input message. The first device may be a device of an OT-layer of the system und the second device may be a device of an IT-layer of the system. The data of the input message are structured according to the first data model.

A following step of the method comprises an extraction of the data of the input message. The step further comprises a mapping of the data of the first data model to a RDF-graph of a predefined information model using a first RDF-template comprising a parser specific to the first data model. In other words the data of the input message are extracted by the semantic information integrator module according to the first RDF template comprising the parser. The semantic information integrator module maps the extracted data and the extracted parameter data to the RDF-graph. The RDF-graph is structured according to a predefined information model. The mapping is performed according to the first RDF template.

A next step comprises an extraction of the data of the RDF-graph of the predefined information model. The step further comprises a mapping of the data to a second data model using a second RDF template comprising a serializer specific to the second data model. In other words, to provide the data according to the second data model the second RDF template is used by the semantic information integrator module to read the data stored in the RDF-graph. The data are mapped to the second data model according to the second RDF-template.

A next step comprises a sending of an output message. The output message comprises the data according to the second data model. In other words, after the data are structured according to the second data model using the second RDF template the semantic information integrator module sends the output message comprising the data according to the second data model. The output message is sent to the second device.

This invention may provide a method for semantic conversion of data and information models. The invention may be applied in the industrial domain but is not limited to this domain. The method is general in sense that it may be virtually applied to any model that needs to be translated into another model. The method does not only apply to conversion of data or information models but includes conversion of model's data too. In practice, the second data model may usually be a standardized model, e.g., an OPC UA information model or a CFX information model, and the first data model may be a proprietary or vendor-specific model. The proposed method is not limited to these cases only.

One frequent use of such a model and data transformation occurs when operational data i.e., the data from an automation device is processed in Information Technology (IT) applications e.g., ERP, MES etc... This data originates from Operation Technology (OT) devices. Nowadays, second devices generate a vast amount of data that can be used for creating added value services. Methods for an effective processing of this data and creation of added value services lay in the domain of first devices. Thus, second devices have to integrate with first devices. First devices need to be able to exchange and interpret data from second devices, and vice versa. In other words, the second devices need to converge with first devices. In such scenarios, the interoperability between second devices and first devices is of a paramount importance. In order to enable the convergence between second devices and first devices, an integration layer may be needed, which may provide a semantic conversion of the data and the data models in both directions. The integration layer may comprise the semantic information integrator module. The proposed invention serves as a method to realize the semantic information integrator module.

The invention has the advantage that interoperability between a first device and a second device structuring data in different data models is provided by the semantic information integrator module. By mapping the data of the first data model to the second data model via the predefined information model, a mapping procedure between multiple of the data models is improved, as a provision of configurations for converting data of each of the first data models to each of the second data models is not necessary.

According to a further embodiment of the invention, the method comprises a step of adding the data of the RDF-graph of the predefined information model to a knowledge graph of the predefined information model. In other words the semantic information integrator module provides a knowledge graph structured according to the predefined information model. The knowledge graph comprises data provided by input messages and possibly other information models. By adding the data of the input messages to the knowledge graph it is possible to provide an output message, which is either based on the mapped information from the input message or information from the input messages enriched with other information from the knowledge graph.

According to further embodiment of the invention, the method comprises a step of adding data of the knowledge graph to the RDF-graph and/or changing of data of the RDF-graph as a function of the data of the knowledge graph. In other words, the output message may be enriched by data of the knowledge graph that were not comprised in the input message.

According to a further embodiment of the invention, the method may comprise a step of validating the RDF-graph using a predefined validation procedure. In other words, the RDF-graph generated by the semantic information integrator module is validated by the semantic information integrator module using the predefined validation procedure. The embodiment has the advantage that a provision of wrong data by the output message may be prevented.

According to further embodiment of the invention, the predefined validation procedure is configured in a shapes constrained language (SHACL). The embodiment has the advantage that a language for validating RDF-graphs is used.

According to further embodiment of the invention, the method comprises the step of identifying the first data model of the input message and a selection of the respective first RDF template from an RDF database of the semantic information integrator module. In other words, the semantic information integrator module comprises the RDF database, comprising multiple of the first RDF templates. The RDF templates are related to the respective first data models. In the method, the semantic information integrator module identifies the first data model used in the input message and selects the respective first RDF template specific for the respective first data model.

According to a further embodiment of the invention, the method comprises the step of identifying the second data model of the output message and a selection of the second RDF template from the RDF database of the semantic information integrator module. In other words, the RDF database of the semantic information integrator module comprises multiple of the second RDF templates. Each of the second RDF templates is related to a respective second data model. To provide the data in the respective second data model, the semantic information integrator module identifies the second data model of a receiving device of the output message and selects the second RDF template from the RDF database that is specific to the respective second data model.

The second aspect of the present invention is related to a semantic information integrator module. The semantic information integrator module is configured to receive an input message from a first device for a second device. The input message comprises data of a first data model. The semantic information integrator module is configured to extract the data of the first data model and to map the data to an RDF-graph of a predefined information model using a first RDF template comprising a parser specific to the first data model. The semantic information integrator module is configured to extract the data of the RDF-graph of the predefined information model and to map the data to a second data model using a second RDF template comprising a serializer specific to the second data model. The semantic information integrator module is configured to send an output message to the second device. The output message comprises the data of the second data model.

A third aspect of the present invention is related to a system comprising a first device, and a second device. The first device is configured to send input messages comprising data in a first data model and/or to receive output messages comprising data in the first data model. The second device is configured to send the input messages comprising data in a second data model and/or to receive output messages comprising data in the second data model. The system comprises the semantic information integrator model according to the second aspect of the present invention.

A fourth aspect of the invention relates to a computer program comprising instructions which, when executed by a computing device, cause the computing device to carry out the steps of the method performed by the semantic information integrator model. The computer program can be made for being executed on the above-mentioned computing device. The computer program can for example be loaded into the memory unit of the computation unit and be executed by the computation unit.

A fifth aspect of the present invention relates to a computer-readable medium comprising instructions which, when executed by a computing device, cause the computing device to carry out the steps of the method performed by the semantic information integrator model. The computer-readable medium may be a permanent or a non-permanent memory. An example for non-permanent memory is random access memory (RAM). Examples for permanent memory are optical storage mediums, for example CD or DVD, hard discs, solid state discs, memory cards and the like.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

Independent of the grammatical term usage, individuals with male, female or other gender identities are included within the term.

In the following, the invention will be explained in detail with reference to specific exemplary implementations and respective schematic drawing. In the drawing, identical or functionally identical elements may be denoted by the same reference signs.

In the figures,
FIG 1 shows a schematic illustration of an exchange of data between two devices;
FIG 2 shows a schematic illustration of a system comprising a semantic information integrator;
FIG 3 shows a schematic illustration of the method to operate the semantic information integrator module;
FIG 4 shows a schematic illustration of the semantic information integrator module; and
FIG 5 shows a schematic illustration of a method to operate as semantic information integrator module.

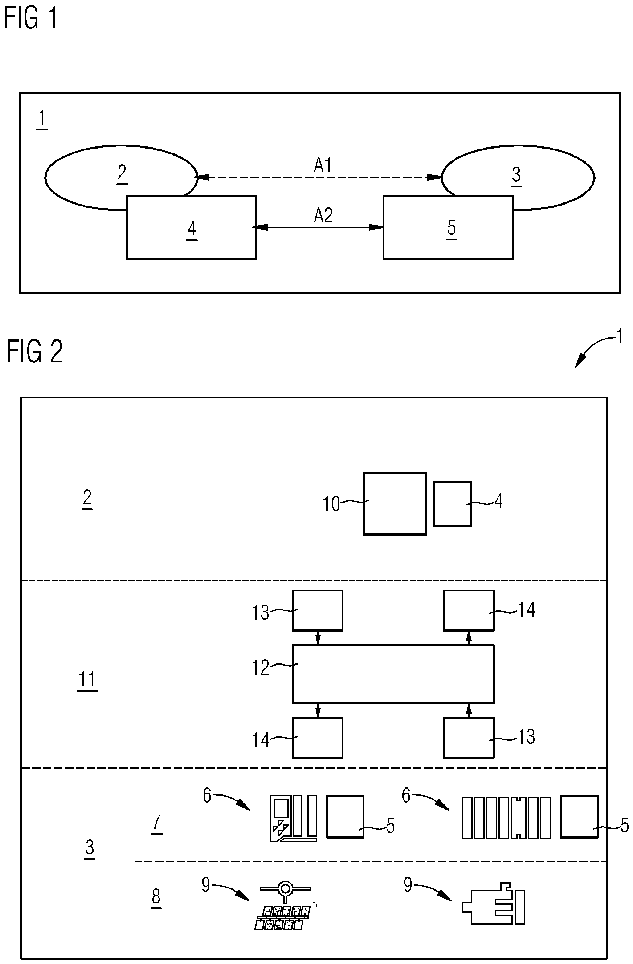

FIG 1 shows a schematic illustration of an exchange of data between two devices according to the state of the art.

The figure shows a system comprising two devices that may be industrial or building automation devices that may exchange data. The system 1 may comprise a first device 2 and a second device 3. The first device 2 and the second device 3 may be configured to exchange data. The data of the first device 2 may be deployed according to a first data model 4. The data of the second device 3 may be deployed according to a second data model 5. When the first data model 4 is different from the second data model 5, it may be necessary to translate the data between the data models 4, 5 in order to allow a data exchange between the devices 2, 3.

If the first device 2 and the second device 3 have a common model under which they interpret the exchanged data, then they may be more flexible during the interaction. They may also be more independent. As an example, first device 2 may be a measurement device of a motor temperature and the second device 3 may be a cooling device for the motor. The second device 3 has to understand observation and measurement to process the sensor values from the first device 2. Thanks to a common semantic model, the first device 2 may deliver data, including a correct quantity kind, data type, unit etc.. The second device 3 may know how to interpret and process this data.

At some point, the first device 2 may start malfunctioning and needs to be replaced with another first device 2. If the new first device 2 delivers data under the same model, the second device 3 will continue to operate intact. Therefore, devices 2, 3 get more independent if they are given a higher degree of interoperability.

Two or more of the devices 2, 3 may not exchange data under a common semantic model. Fig. 1 may show the two devices 2, 3 that may operate under different models, i.e., a first data model 4 and a second data model 5. If they need to communicate and interpret the exchanged data, then they will not be able to achieve this. In this case, the two data models 4, 5 may have to be aligned.

FIG 2 shows a schematic illustration of a system comprising a semantic information integrator.

The system 1 may comprise the first devices 2 and the second devices 3. The first devices 2 may be IT-devices of an IT layer using the first data model 4. The second devices 3 may be OT control devices 6 of a control layer 7 that may use several of the second data models 5. The OT control devices 6 may be configured to control field devices 9 of the OT layer. The IT layer may comprise several first devices 2 using several respective first data models 4. To allow an exchange of data between the second devices 3 using second data models 5 and first devices 2 using first data models 4 an integration layer 11 may be provided. The integration layer 11 may comprise the semantic information integrator module 12. The semantic information integrator module 12 may be configured to receive input messages 13 from one of the first devices 2 and to provide output messages 14 to one of the second devices 3 and/or vice versa. The semantic information integrator module 12 may be configured to convert data 15 of the input message 13 of the first data model 4 to data 15 of the second data model 5 and/or vice versa.

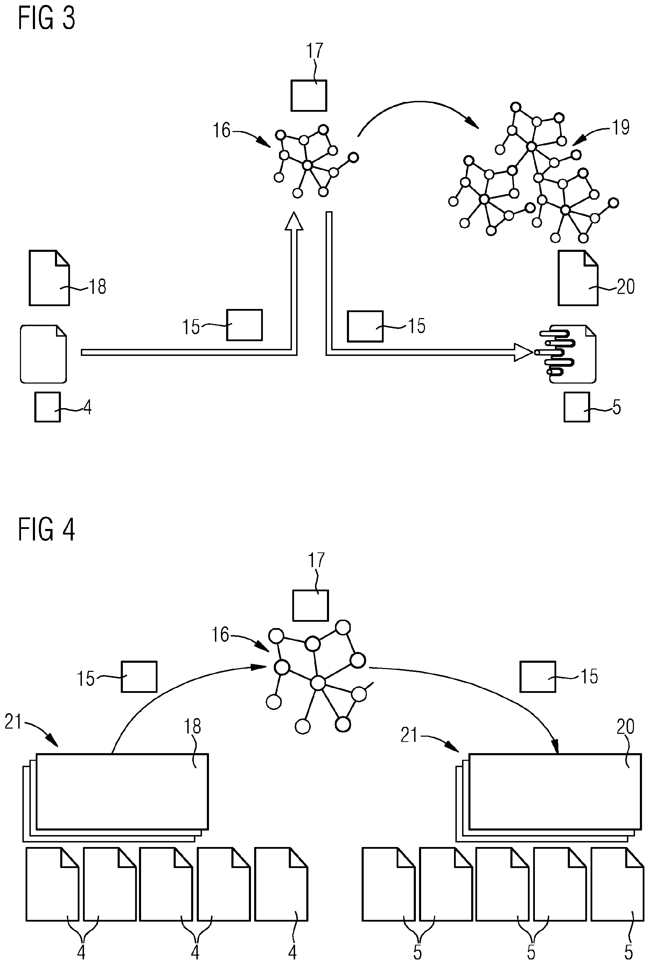

FIG 3 shows a schematic illustration of the method to operate the semantic information integrator module.

The semantic information integrator module 12 may be configured to receive the input message 13. The semantic information integrator module 12 may be configured to extract data 15 provided according to the first data model 4 according to a first RDF template 18 comprising a parser. The first RDF template 18 may be related to the respective first data model 4. The semantic information integrator module 12 may be configured to map the data 15 to an RDF-graph 16 of a predefined information model 17. The semantic information integrator module 12 may be configured to provide the data 15 to a knowledge graph 19 stored in the semantic information integrator module 12. The semantic information integrator module 12 may be configured to extract the data 15 from the RDF-graph 16 according to a second RDF template 20 comprising a serializer. The semantic information integrator module 12 may be configured to map the data 15 to the second data model 5 according to the second RDF template 20

The semantic information integrator module 12 may send the data 15 of the second data model 5 to the second device 3 in the output message 14.

A method for declarative mapping of industrial domain-specific data into standardized information models is proposed. The method enables the data and meta-data from brown-field machines, devices, and automation processes to be integrated and used in modern Industry 4.0 scenarios (e.g., new MES and ERP applications, closed loop analytics, efficient condition monitoring etc.).

The method may be based on the state-of-the-art approach implemented by the Chimera. framework. Details may be found in Scrocca M., Comerio M., Carenini A., Celino I. (2020) Turning Transport Data to Comply with EU Standards While Enabling a Multimodal Transport Knowledge Graph. In: The Semantic Web - ISWC 2020. Springer. and on a Github project side of Chimera.

FIG. 3 describes this approach by showing a typical task of mapping the data and metadata from the first data model 3, that may be a proprietary data model into a standardized information model 17. The standardized information model 17 may represent a standard-based ontology, e.g., an OPC-UA ontology. In FIG. 3 the task of mapping the first data model 3 into the standardized information model 17 may be denoted as lifting. The data 15 and metadata that may be mapped into the standard-based ontology 17 can be further integrated into a knowledge graph 19.

Similar to lifting, a task of lowering is a task of mapping the data 15 and metadata from the standard-based information model 17 into the second data model 4, e.g., represented in formats such as JSON, XML, CSV etc..

The proposed method may be based on so called RDF templates 18, 20. A respective RDF template 18, 20 is a declarative way to extract the data 15 from the first data model 3 and map it into RDF data 16. Further on, the RDF template 18, 20 encodes the semantics of a standard-based ontology too.

FIG 4 shows a schematic illustration of the semantic information integrator module.

The semantic information integrator module 12 may comprise a database 21 comprising multiple of the first RDF templates 18 and multiple of the second RDF templates 20. The first RDF templates 18 may be related to respective first data models 4. The second RDF templates 20 may be related to respective second data models 5 the semantic information integrator module 12 may be configured to identify the respective first data model 4 of the data 15 and to select the respective first RDF template 18, to extract the data 15 and to map the data 15 to the RDF 16 of the predefined information model 17. The semantic information integrator module 12 may be configured to select the second RDF template 20 necessary to provide the data 15 in the respective second data model 5. Using the second RDF template 20 the semantic information integrator module 12 may extract the data 15 from the RDF 16 in the information model 17 and map the data 15 to the second data model 5.

FIG 4 depicts the concept for mapping the vendor-specific first data model 3 into the standardized information models 17. Vendor-specific data may be specified in different formats, e.g., XML, JSON, CSV, TXT, binary etc. For each distinguished serialization format, there may be an available parser. The parser may be accompanied with a declarative language to select and navigate nodes in the input message 13. For example, if XML is used as the input message 13, then XPath may be used to navigate nodes in the input message 13 and extract the content that will be mapped. Further on, if the input message 13 is in JSON, then JSONPath may be used. As said, this procedure is denoted as lifting. Similar procedure applies for lowering too.

The application of this method to domain-specific data may require: (i) the definition and encoding of declarative mapping rules for lifting and lowering, (ii) the configuration of a conversion pipeline to execute the transformation.

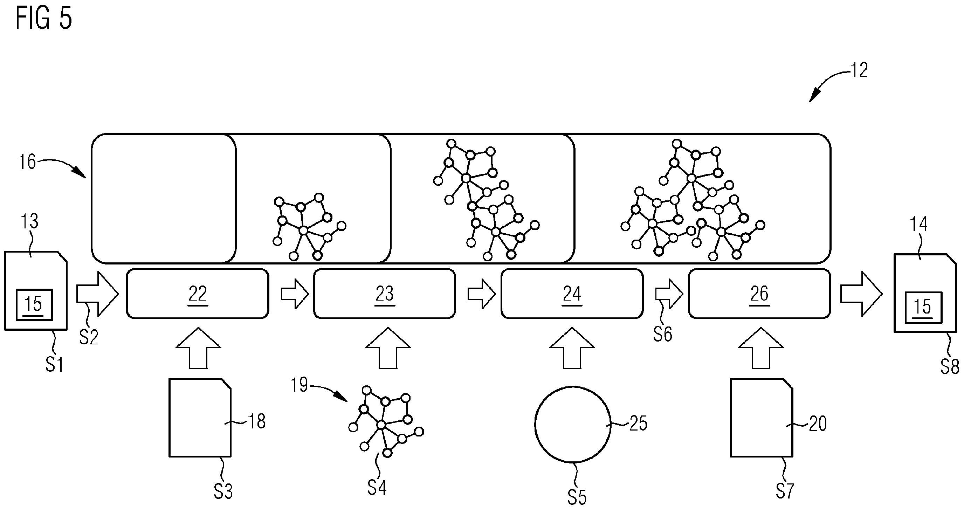

FIG 5 shows a schematic illustration of a method to operate as semantic information integrator module.

In a first step S1 the semantic information integrator module 12 may receive the input message 13. The input message 13 may comprise data 15 according to a first data model 4.

In a second step S2 the semantic information integrator module 12 may determine the first data model 4 and may extract the respective first RDF template 18 from the database 21.

In a third step S3 the semantic information integrator module 12 may extract the data 15 and map the data 15 to an RDF-graph 16 in the information model 17 using the respective first RDF template 18. The lifting procedure may be performed by a lifting component 22 of the semantic information integrator module 12

In a fourth step S4, the semantic information integrator module 12 may add static information from a knowledge graph 19 to the RDF-graph 16 using a data enricher 23 of the semantic information integrator module 12

In a fifth step S5 of the method, the semantic information integrator module 12 may a validate the RDF-graph 16 using a graph validator 24 by means of SHACL shapes 25.

A sixth step S6 may comprise a selection of the second data model 5 and a selection of the respective second RDF template 20 from the database 21.

A seventh step S7 may comprise an extraction of the data 15 of the RDF-graph 16 and the mapping of the data 15 to the second data model 5 using the second RDF template 20.

An eighth step S8 may comprise a transmission of the data 15 of the second data model 5 to the second device 3 in the output message 14.

The execution of the declarative mapping rules can be configured according to specific requirements by defining an appropriate Chimera route for the access to the input and the definition of the expected output. Moreover, additional steps can be added to the route such as: (i) enrichment step: adding static information to the RDF generated dynamically, and (ii) validation step: performing a validation of the RDF being processed (e.g., using SHACL).

Below,- an example of RDF template is shown. The template provides the mapping of OPC UA Information Models in XML data format into an ontological (RDF) representation of the same model. Similar RDF templates may be used also when mapping data from proprietary data models into standardized information models, such as for example, OPC UA Information Models, CFX models etc..

```
 @prefix rdf: <http://www.w3.org/1999/02/22-rdf-syntax-ns#> .
 @prefix me: <http://opcfoundation.org/UA/Meta/> .
 @prefix ta: <http://opcfoundation.org/UA/Meta/TA/> .
  
 #* UA OBJECT TYPES *#
 #set ( $uaobjecttypes = $reader.executeQueryStringValue('
 for $o in //opc:UAObjectType
 return map {
 "nodeld": $o/@NodeId,
 "browseName": $o/@BrowseName,
 "isAbstract": $o/@IsAbstract,
 "accessRestrictions": $o/@AccessRestrictions,
 "writeMask": $o/@WriteMask,
 "userWriteMask": $o/@UserWriteMask,
 "hasSubtype": $o/opc: References/opc: Reference[(@ReferenceType = "HasSubtype")
 and (@IsForward = "false")]/text()
 }
 ') )
  
 #foreach($ot in $uaobjecttypes)
 #set( $iri = $functions.getIRI($ot.nodeId))
 #renderNodeAttributes($iri $ot "ta:")
 $iri a owl:Class ;
 ta:isObjectType true ;
 ta:isAbstract #if($ot.isAbstract)"$ot.isAbstract"#else"false"#end^^xsd:boolean ;
 ta:nodeClass "8"^^xsd:int .
 #if($ot. hasSubtype)
 $iri rdfs:subClassOf $functions.getIRI($ot.hassubtype).
 #else
 $iri rdfs:subClassOf me:ObjectType .
 #end
 #end
```

In this lifting case, the '$reader' variable in the template is bound to an XML reader (parser) that can be used to query the input using XQuery. An example of XQuery, which retrieves nodeIds, browseNames etc. of OPC UA Objects, is shown in the code above. The output from this query is used to generate through a template an RDF document.

For example, for each UA Object from the input XML document, there will be created a semantically equivalent RDF snippet with associated nodeld, browseName, and other fields. Similar RDF templates need to be provided to map other concepts into an information model, e.g., for OPC UA, this would be UA Variable Type, UA Reference Type, UA Data Type etc.

This solution provides a solution for the encoding of complex mapping rules as the ones required to extract the information from OPC-UA and represent it in an appropriate RDF representation. The code below shows, as an example, the encoding of a rule to extract all the values of type ListOf<type> and convert them to ordered RDF Containers. Similarly, the solution provides declarative mappings for all the structured Value elements (Simple Built-in types, Complex Built-in types with fixed structure, Matrixes of Built-in types) trying to provide generic procedures not depending on the input OPC UA specification.

```
 #* VALUES for ListOf Built-in Types *#
 #set ( $qlistof = '
 for $s in //(opc: UAVariable | opc:UAVariableType)/opc:Value/*[starts-with(name(),
 "ListOf")]/child::*
 return map {
 "nodeld": $s/../../../@NodeId,
 "nodeName": $s/../../../name(),
 ')
 #set ( $vlistof = $reader.executeQueryStringValue("$qlistof$queryValue"))
 #set ( $vxmap = $functions.getListMap($vlistof, "nodeld"))
 #if($functions.checkMap($vxmap))
 #foreach($nodeld in $vxmap.keySet())
 #set($iri = $functions.getIRI($nodeId))
 #set($vxvalues = $functions.getListMapValue($vxmap, $nodeld))
 #set($c = 1)
 $iri dtvalue [
       a dt:ListOfValues ;
  dt:valueType "$vxvalues.get(0).valueName" ;
       #foreach($vxval in $vxvalues)
             rdf:_$c
             #renderValue ( $vxval )
             #set($c = $c + 1)
       #end
       ].
       #end
       #end
```

This approach may also utilize externally defined custom functions to facilitate the declarative conversion procedure and bound to the template. As an example, the identification of OPC UA Nodes that are instance declarations requires the computation of the hierarchy of Reference and a recursive application of the definition to determine whether a Node is an instance declaration. Such computation, shown in a code below, would not be possible using a fully declarative approach such RML based on stateless functions.

```
 #* INSTANCE DECLARATIONS *#
 ## Repeat the following steps for each file needed to compose the references hierarchy
 #set( $basereader = $functions.getXMLReaderFromFile($map.basePath) )
 #set( $hreferences = $functions.getReferencesHierarchy($basereader) )
 #set( $hreferences = $functions.updateReferencesHierarchy($reader, $hreferences) )
 #set( $potentialinstdecl = $reader.executeQueryStringValue('
 for $v in /opc: UANodeSet/(opc: UAVariable | opc:UAObject |
 opc: UAMethod)/opc: References/opc: Reference[(@IsForward="false")]
 let $sourceNode := $v/text()
 where count($v/../opc:Reference[(@ReferenceType = "HasModellingRule")]) > 0
 return map {
 "nodeld": $v/../../@NodeId,
 "refType": $v/@ReferenceType,
 "sourceNode": $sourceNode,
 "typeSourceNode": /opc:UANodeSet/child::node()[(@NodeId = $sourceNode)]/name()
 }
 ') )
 #set( $instancedeclarations = $functions.getlnstanceDeclarations($potentialinstdecl,
 $hreferences) )
```

The code below depicts an example of RDF template, which maps data from IPC CFX information models into RDF. The input format is JSON, whereas the output is in RDF Turtle. The query is realized with JSONPath language. A custom reader can be defined to process other data proprietary or standardized formats too.

```
 PREFIX owl: <http://www.w3.org/2002/07/owl#>
 PREFIX xsd: <http://www.w3.org/2001/XMLSchema#>
 PREFIX rdfs: <http://www.w3.org/2000/01/rdf-schema#>
 PREFIX rdf: <http://www.w3.org/1999/02/22-rdf-syntax-ns#>
 PREFIX ex: <http://cefriel.com/example/>
 PREFIX cfx: <http://www.connectedfactoryexchange.com/schema#>
 #set ( $zones = $reader.executeQueryStringValue('
 {"iterator": "$.CommonProcessData.ZoneData[*].Zone",
  "paths": {
     "ReflowZoneType": "ReflowZoneType",
     "StageName": "StageName",
     "StageSequence": "StageSequence",
     "StageType": "StageType"
  }
 }') )
  
     #foreach($z in $zones)
     ex:Zone$z.StageName a cfx:Zone;
 cfx:reflow Zone Type "$z. Reflow Zone Type";
 cfx:stageName "$z.StageName";
 cfx:stageSequence $z.StageSequence;
 cfx:stageType "$z.StageType" .
 #end
```

FIG. 5 shows an example of the pipeline converting data from a custom format (e.g., for describing REHM machines) to its representation in CFX using RDF Templates. The input message can be (dynamically) extracted from the input data source, then after the lifting, the enrichment of the graph with static information is performed and the validation using SHACL shapes. If the validation result is correct, the result is lowered and sent to the right sink. An example SHACL shape for CFX is shown below:

```
 @prefix sh: <http://www.w3.org/ns/shacl#> .
 @prefix rdfs: <http://www.w3.org/2000/01/rdf-schema#> .
 @prefix cfx: <http://www.connectedfactoryexchange.com/schema#> .
 @prefix xsd: <http://www.w3.org/2001/XMLSchema#> .
  
 cfx: ReflowProcessDataShape
 a rdfs:Class ;
 a sh:NodeShape ;
 rdfs:label "ReflowProcessData shape";
 rdfs:subClassOf rdfs:Resource ;
 sh:targetClass cfx:ReflowProcessData ;
 sh: property [
    sh:path cfx:conveyorSpeed ;
    sh:minCount 1 ;
        sh:datatype xsd:double ;
  ] ;
 sh:property [
    sh:path cfx:conveyorSpeedSetpoint ;
    sh:minCount 1 ;
        sh:datatype xsd:double ;
  ];
 sh: property [
    sh:path cfx:zoneData ;
    sh:minCount 1 ;
        sh:class cfx:ReflowZoneData ;
  ];
 .
```

An example of the lowering task is depicted below. In particular, the procedure consists of a SPARQL query and an XML-template. The input for this lowering procedure is RDF-based data, and the output is an OPC UA information model (in XML). The SPARQL query extracts the information to be mapped. The XML-template is provided in accordance with the semantics of an OPC UA information model. Its role is to map the query results into a valid OPC UA document.

```
 #* UA OBJECTTYPE *#
 #set ( $objecttypes = $reader.executeQueryStringValueXML("SELECT *
     WHERE {
        ?ot a owl:Class ;
                      ta:isObjectType true .
             OPTIONAL {
                    ?ot ta:isAbstract ?isAbstract . }
             OPTIONAL {
                    ?ot rdfs:subClassOf ?hasSubtype .
                    ?hasSubtype ta:isObjectType true . }
 }")) ] ;
 .
                    #foreach($ot in $objecttypes)
       #if($functions. isLastNs($ot. ot))
       <UAObjectType #renderNodeAttributes($ot $ot.ot)>
        #renderDisplayName($ot.ot)
        #renderDescription($ot. ot)
        <References>
             #renderReferences( $ot.ot )
             #if($ot.hasSubtype && !$functions.isMeta($ot.hasSubtype))
             <Reference ReferenceType="HasSubtype"
 IsForward="false">$functions.rp($ot.hasSubtype)</Reference>
             #end
        </References>
       </UAObjectType>
       #end
       #end
```

The code below shows yet another example of the lowering procedure. The input for this lowering procedure is RDF-based data, and the output is a CFX model (in JSON). The SPARQL query extracts the information to be mapped. The JSON-template is provided in accordance with the semantics of the IPC CFX standard. Its role is to map the query results into a valid CFX document.

```
 #set( $zonedatas = $reader.executeQueryStringValue('
 SELECT*
 WHERE {
  ?zd a cfx:ReflowZoneData ;
     cfx:zone ?z .
  ?z a cfx: ReflowZone ;
     cfx:reflowZoneType ?reflowZoneType ;
     cfx:stageName ?stageName ;
     cfx:stageSequence ?stageSequence ;
     cfx:stageType ?stageType .
 }
 ORDER BY ?stageSequence
 ') )
  
 {
  "Zone": {
 "ReflowZoneType": "$functions.rp($zd.reflowZoneType)",
 "StageName": "$zd.stageName",
 "StageSequence": $zd.stageSequence,
 "StageType": "$functions.rp($zd.stageType)"
 }
 }
```

### List of Reference

- 1: system
- 2: first device
- 3: second device
- 4: first data model
- 5: second data model
- 6: devices
- 7: control layer
- 8: field layer
- 9: field device
- 10: control device
- 11: integration layer
- 12: semantic information integrator module
- 13: input message
- 14: output message
- 15: data
- 16: RDF-graph
- 17: information model
- 18: first RDF template
- 19: knowledge graph
- 20: second RDF template
- 21: database
- 22: lifting component
- 23: data enricher
- 24: graph validator
- 25: shad shape

## Claims

**1.** A method of operating a semantic information integrator module (12), comprising the following steps performed by the semantic information integrator module (12):
- receiving an input message (13) from a first device (2) for a second device (3), the input message (13) comprising data (15) of a first data model (4) employed by the first device (2);
- extracting the data (15) of the input message (13) and mapping the data (15) of the first data model (4) to an RDF-graph (16) of a predefined information model (17) using a first RDF template (18) comprising a parser specific to the first data model (4);
- extracting the data (15) of the RDF-graph (16) of the predefined information model (17) and mapping the data (15) to a second data model (5) employed by the second device (3) using a second RDF template (20) comprising a serializer specific to the second data model (5);
- sending an output message (14) to the second device (3), the output message (14) comprising data (15) of the second data model (5).

**2.** The method according to claim 1, comprising the following step performed by the semantic information integrator module (12):
- adding the data (15) of the RDF-graph (16) of the predefined information model (17) to a knowledge graph (19) of the predefined information model (17).

**3.** The method according to claim 1 or 2, comprising the following step performed by the semantic information integrator module (12):
- adding the data (15) of the knowledge graph (19) to the RDF (16) and/or changing data (15) of the RDF (16) as a function of the data (15) of the knowledge graph (19).

**4.** The method according to any one of the preceding claims, comprising the following step performed by the semantic information integrator module (12):
- Validating the RDF-graph (16) using a predefined validation procedure.

**5.** The method according to claim 4, wherein the predefined validation procedure is provided in a Shapes Constraint Language.

**7.** The method according to any one of the preceding claims, comprising the following step performed by the semantic information integrator module (12):
- identifying the first data model (4) of the input message (13) and selecting the first RDF template from an RDF-database (21) of the semantic information integrator module (12).

**8.** The method according to any one of the preceding claims, comprising the following step performed by the semantic information integrator module (12):
- identifying the second data model (5) of the output message (14) and selecting the second RDF template from an RDF-database (21) of the semantic information integrator module (12).

**9.** A semantic information integrator module (12), configured to:
- receive an input message (13) from a first device (2) for a second device (3), the input message (13) comprising data (15) of a first data model (4) employed by the first device (2);
- extract the data (15) of the input message (13) and map the data (15) of the first data model (4) to an RDF-graph (16) of a predefined information model (17) using a first RDF template (18) comprising a parser specific to the first data model (4);
- extract the data (15) of the RDF-graph (16) of the predefined information model (17) and map the data (15) to a second data model (5) employed by the second device (3) using a second RDF template (20) comprising a serializer specific to the second data model (5);
- send an output message (14) to the second device, the output message (14) comprising data (15) of the second data model (5);

**10.** A system (1) comprising a first device (2), a second device (3) and the semantic information integrator module (12) according to claim 9.

**11.** A computer program product comprising program code for performing a method according to any one of the preceding claims 1 to 8.

**12.** A computer-readable storage medium comprising at least the computer program product according to claim 11.
